# EUROPEAN PATENT SPECIFICATION

(11) **EP 0 473 274 B1**
(45) Date of publication and mention of the grant of the patent: **12.04.2000**
(21) Application number: 91306690.8
(22) Date of filing: 23.07.1991
(51) Int. Cl.: G06F 12/06

(54) **Memory bank comparator system**
Speicherbankvergleichseinrichtung
Système de comparaison de bancs de mémoire

(30) Priority: 31.08.1990 US 575957
(43) Date of publication of application: 04.03.1992
(73) Proprietor: ADVANCED MICRO DEVICES, INC., Sunnyvale, CA 94088-3453 (US)
(72) Inventor: MacDonald, James, Austin, Texas 78748 (US)
(74) Representative: Wright, Hugh Ronald

(56) References cited:
- EP-A- 0 080 626
- EP-A- 0 183 231
- EP-A- 0 226 791
- WO-A-90/04576
- IBM TECHNICAL DISCLOSURE BULLETIN. vol. 32, no. 8A, January 1990, NEW YORK, US pages 452 - 454; 'Dynamic main storage address to physical location mapping'

## Description

The present invention generally relates to a memory bank comparator system far use in a memory system incorporating a plurality of memory banks. The system may be used in a memory system including a plurality of dynamic random access memory banks and which determines on a cycle-by-cycle basis if a memory address is a valid address, which memory bank is being addressed, whether memory bank interleaving is possible, and what type of memory access cycle is required.

Memory systems are well known in the art. In applications where a large amount of memory space is required, such as in personal computer applications, memory systems may include more than one memory bank. Also, dynamic random access memories are extremely popular in such applications because of their extremely high memory density.

In a typical system, when a byte of data is to be stored, each memory bank is provided with the same memory address, first a row address, and then a column address. The particular memory location is selected with the application of first, a row address strobe signal and then a column strobe signal being applied to the proper memory bank. A write enable signal is then applied to each memory bank which is maintained as the byte of data is conveyed to each bank. Because only one bank is enabled to receive the row and column address, the byte of data is stored within its own unique storage location.

Enhancements have been added to this general memory accessing procedure to improve upon memory access time. For example, a paging mode has been adopted wherein, instead of providing a newly generated row strobe signal during each cycle, the row strobe signal is maintained while new column addresses and column strobe signals are generated. The row strobe signal is maintained until a new row address is detected. This reduces addressing time and has been found to be advantageous since data is normally stored in bytes with a given memory bank being accessed for a number of consecutive cycles.

Another enhancement has been the interleave mode. Interleaving is the practice of storing consecutive bytes of data in alternating or successive memory banks. This practice speeds up memory access because it counters the effect of row address strobe precharge. Hence, while a byte of data is stored in a memory bank, the row address strobe for the previous memory bank may be precharged fully and be ready for the next byte of data to be entered into that memory bank.

In addition to the foregoing, dynamic random access memories have been improved so that such devices are available in different types with each type corresponding to a respective different storage capacity. There are basically three different dynamic random access memory types, a 256Kb type, a 1Mb type, and a 4 Mb type. These different memory types afford flexibility to the ultimate user who may wish to tailor the storage size to a particular application or to increase the storage size of an existing system. Unfortunately, each memory type requires a different type of access cycle. This is mainly due to the need for a different number of address bits for each type. For example, the 256Kb type requires nine row and nine column address bits, the 1Mb type requires ten row and ten column address bits, and the 4Mb type requires eleven row and eleven column address bits. Also, memory type is important from the aspect of interleaving, since interleaving is only possible between memory banks of the same type.

Hence, from the foregoing, it can be seen that multiple bank memory systems require memory management. One important aspect of such memory management is to determine which bank is to receive a byte of data. Another important aspect is to determine if interleaving is possible if interleaving is enabled. A still further aspect is to determine the type of memory bank in which the byte of data is to be stored to enable the selection of the proper cycle type. Lastly, it is important to be able to determine if the memory address is a valid address, in other words, if there is an available storage location in one of the memory banks corresponding to the memory address.

One disadvantage in the prior art has been that such systems generally require the interleaving configuration to be determined at the time the system is configured. This places an extreme restriction on the flexibility of the system and does not permit memory bank interchanges after a system is configured. Also, although interleaving cycle type may be determined, such interleaving may not be possible under a given set of circumstances, such as, for example, when a memory bank to be interleaved is empty. This can result in the system not knowing where to store a given byte of data.

IBM Technical Disclosure Bulletin Vol.32, No.8A January 1990, pages 452-454 "Dynamic main storage address to physical location mapping" discloses a logic circuit algorithm for associating a main storage address to a physical memory card location. Registers are initialised to indicate the amount of memory on each card. The first step is the calculation of the accumulative maximum address through each memory card. The second step is to compare the address for a memory access to each of the card range values simultaneously. The outcome of the compares controls access to the correct memory card. If no compare is made, then the address is above the maximum in the system.

EP-0 080 626 discloses memory module selection in a data processing system and has similar constituent features to those in the IBM Technical Disclosure Bulletin article just referred to.

According to the present invention there is provided a memory bank comparator system for use in a memory system including a plurality of consecutively ordered memory banks, each said memory bank having a given storage capacity type, said memory bank comparator system being responsive to a memory access address and comprising:
configuration means for providing configuration data representative of the storage capacity type of each of said memory banks;
means responsive to said configuration data for providing a plurality of cumulative storage capacity signals wherein each of said cumulative storage capacity signals corresponds to one of said memory banks and comprises data representative of the total storage capacity of its corresponding one of said memory banks and the storage capacities of the preceding ordered memory banks;
comparing means for comparing said memory access address to said cumulative storage capacities for providing a set of intermediate control signals, said set of intermediate control signals including information indicative of whether said memory access address is present within one of said memory banks; and
first decoder means having an output and being responsive to said set of intermediate control signals for providing a selected bank signal at said output, wherein the selected bank signal indicates the memory bank being accessed by said memory access address;
   *characterised in that* said system further comprises:
second decoder means having a second output and being responsive to said selected bank signal and said configuration data, for providing at said second output a selected bank capacity type control signal indicative of the storage capacity type of the memory bank being accessed by said memory access address;
a memory bank storage capacity type comparing means responsive to said configuration data, for determining if two or more of said memory banks have the same storage capacity type, and
a third decoding means, responsive to said selected bank signal and said memory bank storage capacity type comparing means, for generating an interleave control signal representative of an interleave factor for the memory bank being accessed by said memory access address.

EP-0 183 231-A discloses a microprocessor memory control system which includes a configuration register for storing information as to the type of each memory bank (range of address data), and a selecting circuit and control signal generator responsive to the configuration register and to comparators and a decision circuit for interpreting which type of memory bank data is to be stored in and generating control signals accordingly.

WO 90/04576A discloses a memory control system wherein a decoder indicates the possibility of memory bank interleaving in terms of the number of ways in which interleaving is possible based on the address and the number of modules in the system. However, in this system all modules are of common type with respect to storage capacity.

In the system of the present invention:
said configuration means may comprise a plurality of configuration registers, wherein each one of said plurality of configuration registers corresponds to one of said memory banks and contains said configuration data indicative of the storage capacity type of its corresponding one of said memory banks;
said means responsive to said configuration data may comprise adding means coupled to said plurality of configuration registers, for generating said plurality of cumulative storage capacity signals responsive to the configuration data contained in said plurality of configuration registers;
said comparing means may comprise an address comparator disposed to receive said plurality of cumulative storage capacity signals and said access address and to generate in response thereto said set of intermediate control signals;
said first decoder means may comprise a bank decoder having a plurality of outputs wherein each of said plurality of outputs corresponds to one of said memory banks, said bank decoder being disposed to receive said set of intermediate control signals and generate, in response thereto, an enable signal at an output of said plurality of outputs which corresponds to the memory bank being accessed by the access address;
said second decoder means may comprise a plurality of selectors, wherein each of said plurality of selectors corresponds to one of said memory banks and has a signal input, an enable input, and a signal output, wherein the signal input of each of said plurality of selectors is coupled to one of said plurality of configuration registers, wherein the enable input of each of said plurality of selectors is coupled to one of said plurality of outputs of said bank decoder, whereby upon the generation of an enable signal by said bank decoder at one of said outputs, the selector coupled to the enabled bank decoder output generates at its signal output said control signal indicative of the storage capacity type of the memory bank being accessed by the access address;
said storage capacity type comparing means may be coupled to said configuration registers; and
said third decoding means may comprise decode logic coupled to said storage capacity type comparing means and the outputs of said bank decoder, said decode logic being responsive to the enable signals generated at said outputs of said bank decoder and said memory bank storage capacity type comparing means, for generating said interleave control signal.

In the system of the present invention said memory banks may include first, second, third and fourth memory banks, and said memory bank storage capacity type comparing means may determine if said first and second memory banks have the same storage capacity type, if said third and fourth memory banks have the same storage capacity type, and if said first, second, third and fourth memory banks have the same storage capacity type. In this case said interleave control signal may provide an indication whether said first and second or said third and fourth memory banks may be interleaved, whether said first, second, third, and fourth memory banks may be interleaved, or whether none of said memory banks may be interleaved.

### BRIEF DESCRIPTION OF THE DRAWINGS

The features of the present invention which are believed to be novel are set forth with particularity in the appended claims. The invention, together with further objects and advantages thereof, may best be understood by making reference to the following description taken in conjunction with the accompanying drawings, in the several figures of which like reference numerals identify identical elements and wherein:
Figure 1 is a block diagram of a memory bank comparator system embodying the present invention; and
Figure 2 is a detailed block diagram of the cycle type decision logic of Figure 1.

### DETAILED DESCRIPTION OF THE PREFERRED EMBODIMENT

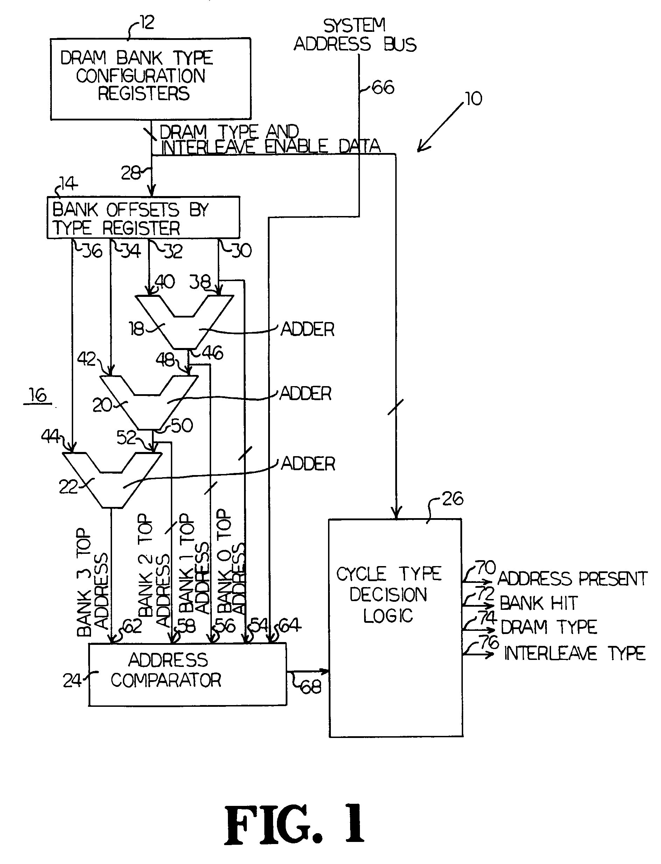

Referring now to Figure 1, it illustrates a memory bank comparator system 10 embodying the present invention. The memory bank comparator system 10, in accordance with this preferred embodiment, is adapted for use with a memory system including four dynamic random access memory banks and wherein memory addresses are provided in a manner so that each memory address indicates the number of memory storage locations having lower addresses.

The memory bank comparator system 10 generally includes a DRAM bank-type configuration register 12, a bank offsets by type register 14, an adder 16, an address comparator 24, and a cycle-type decision logic 26. The adder 16 includes adders 18, 20 and 22.

The configuration register 12 is arranged to store two bits of data for each of the four memory banks which indicate a particular type of DRAM memory bank used in the memory banks. As previously mentioned, the DRAM memory banks may be a 256Kb type, a 1Mb type, or a 4Mb type. The configuration register 12 conveys the eight configuration bits over an 8-bit parallel bus 28 to the bank offsets by type register 14. The register 14 includes outputs 30, 32, 34 and 36. It assigns a factor for each of the memory bank types, wherein each factor corresponds to the maximum number of storage locations within each of the memory bank types. More specifically, the register 14 provides at its outputs 30, 32, 34 and 36 a 5-bit indication as to the maximum number of storage locations within the first, second, third and fourth memory banks respectively. The 5-bits provided at the outputs 30, 32, 34 and 36 are the most significant five bits representing the maximum number of storage locations within each of the memory banks.

The adder 16 adds the factors provided by the register 14 to provide a total sum and a partial or intermediate sum for each memory bank. The total sum corresponds to the total number of storage locations within the memory system memory banks. The partial or intermediate sum for each of the memory banks corresponds to the maximum number of storage locations within each respective memory bank plus the sum of the maximum number of storage locations of the memory banks which precede the respective memory bank. To that end, output 30 of register 14 is coupled to an input 38 of adder 18, output 32 is coupled to an input 40 of adder 18, output 34 is coupled to an input 42 of adder 20, and output 36 is coupled to an input 44 of adder 22. The output 46 of adder 18 is coupled to the input 48 of adder 20 and output 50 of adder 20 is coupled to input 52 of adder 22. Lastly, the output 30 of register 14 is also coupled to an input 54 of address comparator 24, the output 46 of adder 18 is coupled to an input 56 of address comparator 24, the output 50 of adder 20 is coupled to an input 58 of address comparator 24, and the output 60 of adder 22 is coupled to an input 62 of address comparator 24. Hence, the inputs 54, 56 and 58 of address comparator 24 are provided with the aforementioned partial or intermediate sums corresponding to the first memory bank, second memory bank, and third memory bank and input 62 is provided with the total sum corresponding to the fourth memory bank respectively.

The address comparator 24 includes a further input 64 which is coupled to the system address bus 66. The address comparator 24 at input 64 thus receives a memory address, for each memory access cycle over the system address bus 66. As previously mentioned, the memory addresses are assigned so that each memory address is indicative of the total number of memory storage locations having lower addresses utilized within the memory system. The address comparator 24 compares the memory address received over bus 66 to each of the sums at its inputs 54, 56, 58 and 62 for providing at a 4-bit output 68 intermediate control signals indicating which ones of the memory banks have available storage locations for the byte of data to be stored. In accordance with this preferred embodiment, the sums at inputs 56, 58 and 62 are represented by six bits. The cycle type decision logic 26 is responsive to the address comparator 24 and the configuration register 12 for indicating at a single bit output 70 whether the memory address is valid, at a 4-bit output 72 which memory bank is being addressed, at a 3-bit output 74 what type of dynamic random access memory is being addressed, and a 3-bit output 76 if memory bank interleaving is possible and, if so, the type interleaving which is possible.

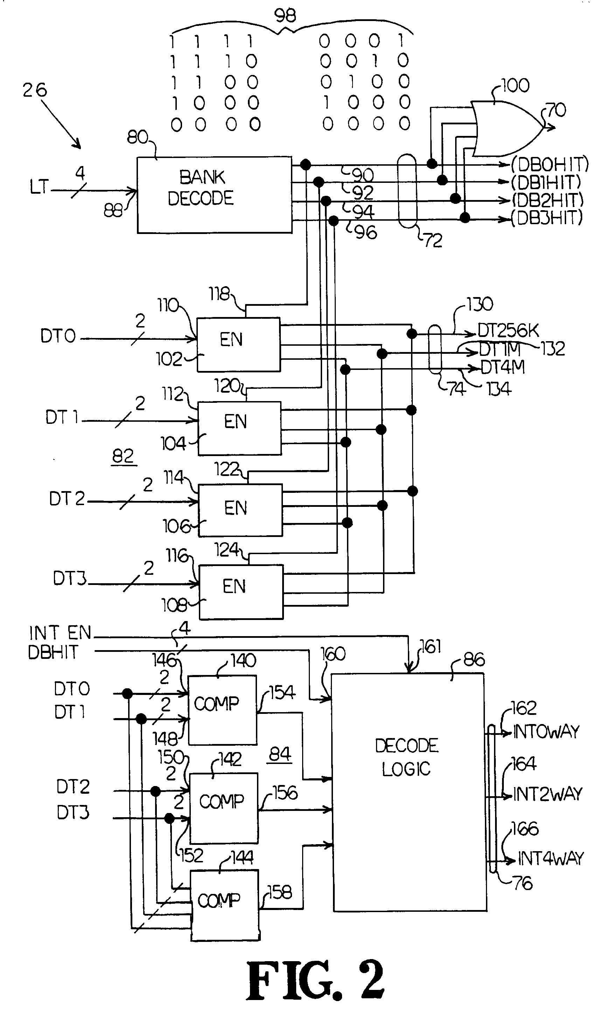

Referring now to Figure 2, it illustrates in greater detail the cycle type decision logic 26 of Figure 1. The cycle type decision logic 26 generally includes a memory bank decoder 80, a memory bank type decoder 82, a memory bank type comparator 84, and decode logic 86.

The bank decoder 80 includes a 4-bit input 88 which is coupled to the 4-bit output 68 of the address comparator 24. The four bits at input 88 are the intermediate control signals which represent the individual memory banks which have available storage locations for the bit of data to be stored. The bank decoder further includes four output lines 90, 92, 94 and 96 which form the output 72 of the cycle type decision logic 26. The truth table for the bank decoder 80. is indicated in the Figure by reference numeral 98. As indicated by the truth table 98, if all four bits of the address comparator are logical ones, line 90 will have a logical one. If the first bit is zero and the last three are ones, line 92 will have a logical one. If the first two bits are zeros and the last two bits are ones, line 94 will have a logical one, and if the first three bits are zeros and the fourth bit is a one, line 96 will have a logical one. If all four bits of the address comparator are zeros, none of the lines 90, 92, 94 and 96 will have a logical one. As a result, if the memory address is less than the first sum at input 54 of address comparator 24, the logical one on line 90 will indicate that the first memory bank is being addressed. If the memory address is less than the sum at input 56 but greater than the sum at input 54, the logical one on line 92 will indicate that the second memory bank is being addressed. If the memory address is less than the sum at input 58 but greater than the sum at input 56, the logical one on line 94 will indicate that the third memory bank is being addressed. If the memory address is less than the sum at input 62, but greater than the sum at input 58, the logical one on line 96 will indicate that the fourth memory bank is being addressed. Lastly, if the memory address is greater than the total sum at input 62, then the lack of a logical one on any of the lines, 90,92, 94 and 96 will indicate that the address is an invalid address.

An exclusive OR gate 100 includes four input: with each input being coupled to a respective given one of the lines 90, 92, 94 and 96. If any one of the lines 90, 92, 94 and 96 has a logical one, the exclusive OR gate 100 will provide at its output 70, which is the output 70 of the cycle type decision logic 26, a logical one indicating that the memory address is a valid address and that there is an available storage location within the memory system for the bit of data to be stored.

The memory bank type decoder 82 determines the type of memory bank in which the data bit is to be stored. The memory bank type decoder 82 includes selectors 102, 104, 106 and 108. Each of the selectors includes a 2-bit input, selector 102 having input 110, selector 104 having input 112, selector 106 having input 114 and selector 108 having input 116. The inputs 110, 112, 114 and 116 are coupled to the configuration register 12 with each input receiving a 2-bit indication as to the type of dynamic random access memory employed within its respective memory bank. The selectors 102, 104, 106 and 108 further each include an enable input 118, 120, 122 and 124 respectively, which are coupled to the lines 90, 92, 94 and 96 respectively.

Each of the selectors 102, 104, 106 and 108 also includes three outputs with each output corresponding to a respective different one of the dynamic random access memory types. The corresponding outputs are coupled together to form the DRAM type output 74 of the cycle type decision logic 26. The output 74 includes a first output line 130 corresponding the 256Kb memory type, output line 132 corresponding to the 1Mb memory type, and output 134 corresponding to the 4Mb memory type. When one of the output lines 90, 92, 94 and 96 of the bank decoder 80 is a logical one, its corresponding selector 102, 104, 106 and 108 will be enabled. The enabled selector, in response to the 2-bit memory type input, will provide a logical one at its output corresponding to the memory type indicated by the 2-bit input. For example, if output line 92 is high, indicating that the second memory bank is being addressed, selector 104 is enabled. If the 2-bit input 112 has a 2-bit input from the configuration register indicating that the second memory bank is a 1Mb memory type, it will provide a logical one to output line 132 to thereby indicate that the addressed memory bank is a 1Mb memory type. This information can then be utilized to select the proper access cycle type for the 1Mb memory within the second memory bank.

The memory bank type comparator 84 includes comparators 140, 142 and 144. Each of the comparators is coupled to the configuration register for receiving the 2-bit indication as to the type of memory which is employed in the respective memory banks. To that end, comparator 140 includes a 2-bit input 146 for receiving the 2-bit indication as to the type of memory in the first memory bank and a second 2-bit input 148 for receiving the 2-bit indication as to which type of memory is in the second memory bank. Similarly, comparator 142 includes a first 2-bit input 150 for receiving the 2-bit indication as to the type of memory within the third memory bank and a second 2-bit input 152 for receiving the 2-bit indication of the type of memory within the fourth memory bank. Comparator 144 includes four 2-bit inputs for receiving the 2-bit indications as to the type of memory within the first, second, third and fourth memory banks.

As can be seen from the above, comparator 140 is arranged to-determine if the first and second memory banks are of the same type, comparator 142 is arranged to determine if the third and fourth memory banks are of the same type, and comparator 144 is arranged to determine if all four of the memory banks are of the same type. If the first and second memory banks are of the same type, comparator 140 will provide at an output 154 a logical one, if the third and fourth memory banks are of the same type, comparator 142 will provide at an output 156 a logical one, and if all four memory banks are of the same type, comparator 144 will provide at an output 158 a logical one. The outputs 154, 156 and 158 of comparators 140, 142 and 144 respectively are coupled to the decode logic 86. The decode logic 86 is also coupled to the output lines 90, 92, 94 and 96 of the bank decoder 80 at a 4-bit input 160 and to an interleave enable at an input 161.

The decode logic further includes the output 76 of the cycle type decision logic 26 which includes output lines 162, 164 and 166. If two-way interleaving is possible, the decode logic will provide a logical one on output line 164. This indicates that either the first and second memory banks may be interleaved or the third and fourth memory banks may be interleaved. If the decode logic provides a logical one at output 166, this will indicate that all four memory banks may be interleaved. If the decode logic provides a logical one at output line 162, this will indicate that none of the memory banks may be interleaved. As previously mentioned, memory banks may only be interleaved if they include memories of the same type. In addition, in accordance with this preferred embodiment, only the first and second memory banks may be interleaved, the third and fourth banks may be interleaved, or all four memory banks may be interleaved together.

If interleaving is not enabled by the system configuration, the decode logic will receive a logical zero at its input 161 and provide a logical one at its output 162. If interleaving is enabled, the decode logic in response to the memory bank type comparator 84 will determine whether 2-way or 4-way interleaving is possible. For example, if output line 90 of the bank decoder is at a logical one indicating that the first memory bank is being addressed, and if comparator 140 determines that the first and second memory banks are of the same type, the decode logic will then provide a logical one at output 164 indicating that 2-way interleaving is possible. If, in this case, comparator 144 determines that all four of the memory banks include memories of the same type, it will provide a logical one at output 166 indicating that 4-way interleaving is possible.

Hence, from the foregoing, it can be seen that there is described a memory bank comparator system which operates on a cycle by cycle basis to determine if a memory address is a valid address, which memory bank is being addressed, what type of memory bank is being addressed, and whether interleaving is possible. Because the described memory bank comparator system generates the sums for each of the memory banks, it can make such determinations on a cycle-by-cycle basis. As a result, interleaving cycle type need not be set when the system is configured, and the memory system may be operated even with empty memory banks. In addition, the described memory bank comparator system assigns the addresses in a linear manner with the lower addresses being assigned to the lower number banks.

## Claims

1. A memory bank comparator system for use in a memory system including a plurality of consecutively ordered memory banks (DB0-DB3), each said memory bank having a given storage capacity type, said memory bank comparator system being responsive to a memory access address (64) and comprising:
configuration means (12) for providing configuration data (DT0-DT3) representative of the storage capacity type of each of said memory banks;
means (14,16) responsive to said configuration data for providing a plurality of cumulative storage capacity signals (62,58,56,54), wherein each of said cumulative storage capacity signals corresponds to one of said memory banks (DB0-DB3) and comprises data representative of the total storage capacity of its corresponding one of said memory banks and the storage capacities of the preceding ordered memory banks;
comparing means (24) for comparing said memory access address (64) to said cumulative storage capacities (62,58,56,54) for providing a set of intermediate control signals (68), said set of intermediate control signals including information indicative of whether said memory access address is present within one of said memory banks; and
first decoder means (80) having an output (72) and being responsive to said set of intermediate control signals (68) for providing a selected bank signal (DB0HIT-DB3HIT) at said output, wherein the selected bank signal indicates the memory bank being accessed by said memory access address;
*characterised in that* said system (10) further comprises:
second decoder means (82) having a second output (74) and being responsive to said selected bank signal (DB0HIT-DB3HIT) and said configuration data (DT0-DT3), for providing at said second output (74) a selected bank capacity type control signal (130,132,134) indicative of the storage capacity type of the memory bank being accessed by said memory access address;
a memory bank storage capacity type comparing means (84) responsive to said configuration data (DT0-DT3), for determining if two or more of said memory banks have the same storage capacity type; and
a third decoding means (86), responsive to said selected bank signal (DB0HIT-DB3HIT) and said memory bank storage capacity type comparing means (84), for generating an interleave control signal (76) representative of an interleave factor for the memory bank being accessed by said memory access address.

2. The system of claim 1 wherein the selected bank signal (DB0HIT-DB3HIT) comprises a plurality of enable signals (118,120,122,124), each one of said plurality of enable signals corresponding to one of said memory banks, wherein said first decoder means (80) provides the one of said plurality of enable signals which corresponds to the memory bank being accessed by said access address.

3. The system of claim 2 wherein said second decoder means (82) includes a plurality of selectors (102,104,106,108), wherein each of said plurality of selectors has a signal input (110,112,114,116), a signal output, and an enable input (EN) and corresponds to one of said memory banks, wherein each of said selectors receives the configuration data (DT0-DT3) representative of the capacity type of its respective memory bank at its signal input, and generates the control signal representative of the capacity type of its respective memory bank at its signal output when a corresponding one of said plurality of enable signals (118,120,122,124) is applied to its enable input (EN).

4. The system of claim 1 wherein:
said configuration means (12) comprises a plurality of configuration registers, wherein each one of said plurality of configuration registers corresponds to one of said memory banks and contains said configuration data (DT0-DT3) indicative of the storage capacity type of its corresponding one of said memory banks;
said means (14,16) responsive to said configuration data comprises adding means (16) coupled to said plurality of configuration registers, for generating said plurality of cumulative storage capacity signals (62,58,56,54) responsive to the configuration data contained in said plurality of configuration registers;
said comparing means (24) comprises an address comparator (24) disposed to receive said plurality of cumulative storage capacity signals (62,58,56,54) and said access address (64) and to generate in response thereto said set of intermediate control signals (68);
said first decoder means (80) comprises a bank decoder (80) having a plurality of outputs (90,92,94,96), wherein each of said plurality of outputs corresponds to one of said memory banks, said bank decoder being disposed to receive said set of intermediate control signals (68) and generate, in response thereto, an enable signal (118,120,122,124) at an output of said plurality of outputs (90,92,94,96) which corresponds to the memory bank being accessed by the access address;
said second decoder means (82) comprises a plurality of selectors (102,104,106,108), wherein each of said plurality of selectors corresponds to one of said memory banks and has a signal input (110,112,114,116), an enable input (EN), and a signal output (74), wherein the signal input of each of said plurality of selectors is coupled to one of said plurality of configuration registers, wherein the enable input (EN) of each of said plurality of selectors (102,104,106,108) is coupled to one of said plurality of outputs (90,92,94,96) of said bank decoder (80), whereby upon the generation of an enable signal by said bank decoder at one of said outputs, the selector coupled to the enabled bank decoder output generates at its signal output said control signal (130,132,134) indicative of the storage capacity type of the memory bank being accessed by the access address;
said storage capacity type comparing means (84) is coupled to said configuration registers; and
said third decoding means (86) comprises decode logic (86) coupled to said storage capacity type comparing means (84) and the outputs of said bank decoder (80), said decode logic being responsive to the enable signals generated at said outputs of said bank decoder and said memory bank storage capacity type comparing means, for generating said interleave control signal (76).

5. The system of any preceding claim wherein said intermediate control signals (68) include a plurality of bits, wherein each of said plurality of bits corresponds to one of said memory banks, wherein the bit of said plurality of bits which corresponds to a given one of said memory banks is enabled if the access address is equal to or less than the highest address of said given one of said memory banks.

6. The system of any preceding claim further comprising means (100) responsive to said selected bank signal (DB0HIT-DB3HIT), for generating a validity signal (70) indicative of whether any one of said memory banks is accessed by said memory access address.

7. The system of any preceding claim wherein said memory banks include first, second, third and fourth memory banks, and wherein said memory bank storage capacity type comparing means (84) determines if said first and second memory banks have the same storage capacity type (140), if said third and fourth memory banks have the same storage capacity type (142), and if said first, second, third and fourth memory banks have the same storage capacity type (144).

8. The system of claim 7 wherein said interleave control signal (76) provides an indication whether said first and second or said third and fourth memory banks may be interleaved (164), whether said first, second, third, and fourth memory banks may be interleaved (166), or whether none of said memory banks may be interleaved (162).

## Patentansprüche

1. Speicherbank-Komparatorsystem zum Einsatz in einem Speichersystem mit mehreren in fortlaufender Reihenfolge geordneten Speicherbänken (DB0-DB3), wobei jede Speicherbank eine vorgegebene Speicherkapazität aufweist und jedes Speicherbank-Komparatorsystem auf eine Speicherzugriffsadresse (64) anspricht, mit:
einer Konfigurationseinrichtung (12) zum Bereitstellen von Konfigurationsdaten (DT0-DT3), die für die Speicherkapazität jeder Speicherbank repräsentativ sind;
einer Einrichtung (14, 16), die auf die Konfigurationsdaten zum Erzeugen mehrerer kumulativer Speicherkapazitätssignale (62, 58, 56, 54) anspricht, bei der jedes kumulative Speicherkapazitätssignal einer Speicherbank (DB0-DB3) entspricht und Daten umfaßt, die für die gesamte Speicherkapazität der entsprechenden einen Speicherbank und die Speicherkapazitäten der in der Reihenfolge vorangehenden Speicherbänke repräsentativ sind;
einer Komparatoreinrichtung (24) zum Vergleichen der Speicherzugriffsadresse (64) mit den kumulativen Speicherkapazitäten (62, 58, 56, 54) zum Erzeugen eines Satzes von Zwischen-Steuersignaien (68), wobei der Satz von Zwischen-Steuersignalen Informationen enthält, die anzeigen, ob die Speicherzugriffsadresse in einer der Speicherbänke vorhanden ist; und
einer ersten Dekodiereinrichtung (80) mit einem Ausgang (72), die zum Erzeugen eines selektierten Banksignals (DB0HIT-DB3HIT) am Ausgang auf den Satz von Zwischen-Steuersignalen (68) anspricht, bei der das selektierte Banksignal anzeigt, daß die Speicherzugriffsadresse auf die Speicherbank zugreift;
*dadurch gekennzeichnet*, daß das System (10) ferner aufweist:
eine zweite Dekodiereinrichtung (82) mit einem zweiten Ausgang (74), die auf das selektierte Banksignal (DB0HIT-DB3HIT) und das Konfigurationssignal (DT0-DT3) anspricht zum Erzeugen eines selektierten Bankkapazitäts-Steuersignals (130, 132, 134) am zweiten Ausgang (74), das die Speicherkapazität derjenigen Speicherbank anzeigt, auf die die Speicherzugriffsadresse zugreift;
eine Speicherbank-Speicherkapazitäts-Komparatoreinrichtung (84), die auf die Konfigurationsdaten (DT0-DT3) anspricht zum Feststellen, ob zwei oder mehrere Speicherbänke die gleiche Speicherkapazität haben, und
eine dritte Dekodiereinrichtung (86), die auf das selektierte Banksignal (DB0HIT-DB3HIT) und die Speicherbank-Speicherkapazitäts-Komparatoreinrichtung (84) anspricht zum Erzeugen eines Verschachtelungs-Steuersignals (76), das für einen Verschachtelungsfaktor für diejenige Speicherbank, auf die die Speicherzugriffsadresse zugreift, repräsentativ ist.

2. System nach Anspruch 1, bei dem das selektierte Banksignal (DB0HIT-DB3HIT) mehrere Freigabesignale (118, 120, 122, 124) umfaßt, wobei jedes der mehreren Freigabesignale einer Speicherbank entspricht, und bei dem die erste Dekodiereinrichtung (80) das eine der mehreren Freigabesignale erzeugt, das derjenigen Speicherbank entspricht, auf die die Zugriffsadresse zugreift.

3. System nach Anspruch 2, bei dem die zweite Dekodiereinrichtung (82) mehrere Selektoren (102, 104, 106, 108) aufweist und bei dem jeder der mehreren Selektoren einen Signaleingang (110, 112, 114, 116), einen Signalausgang und einen Freigabeeingang (EN) umfaßt und einer der Speicherbänke entspricht, und bei der jeder Selektor diejenigen Konfigurationsdaten (DT0-DT3) empfängt, die für die Kapazität der jeweiligen Speicherbank an seinem Signaleingang repräsentativ ist, und dasjenige Steuersignal erzeugt, das für die Kapazität seiner jeweiligen Speicherbank an seinem Signalausgang repräsentativ ist, wenn ein entsprechendes der mehreren Freigabesignale (118, 120, 122, 124) an seinen Freigabeeingang (EN) angelegt wird.

4. System nach Anspruch 1, bei dem
die Konfigurationseinrichtung (12) mehrere Konfigurationsregister aufweist, von denen jedes jeweils einer der Speicherbänke entspricht und diejenigen Konfigurationsdaten (DT0-DT3) enthält, die die Speicherkapazität seiner entsprechenden einen Speicherbank anzeigen;
die Einrichtung (14, 16), die auf die Konfigurationsdaten anspricht, eine mit den mehreren Konfigurationsregistern gekoppelte Addiereinrichtung (16) zum Erzeugen der mehreren kumulativen Speicherkapazitätssignale (62, 58, 56, 54) aufweist, die auf die in den mehreren Konfigurationsregistern enthaltenen Daten ansprechen;
die Komparatoreinrichtung (24) einen Adressenkomparator (24) aufweist, der derart angeordnet ist, daß er mehrere kumulative Speicherkapazitätssignale (62, 58, 56, 54) und die Zugriffsadresse (64) empfängt und in Reaktion darauf den Satz von Zwischen-Steuersignalen (68) erzeugt;
die erste Dekodiereinrichtung (80) einen Bankdekodierer (80) mit mehreren Ausgängen (90, 92, 94, 96) aufweist, von denen jeder jeweils einer der Speicherbänke entspricht, wobei der Bankdekodierer derart angeordnet ist, daß er den Satz von Zwischen-Steuersignalen (68) empfängt und in Reaktion darauf ein Freigabesignal (118, 120, 122, 124) an einem Ausgang der mehreren Ausgänge (90, 92, 94, 96) erzeugt, welcher derjenigen Speicherbank entspricht, auf die die Zugriffsadresse zugreift;
die zweite Dekodiereinrichtung (82) mehrere Selektoren (102, 104, 106, 108) aufweist, von denen jeder jeweils einer der Speicherbänke entspricht und einen Signaleingang (110, 112, 114, 116), einen Freigabeeingang (EN) und einen Signalausgang (74) aufweist, wobei der Signaleingang jedes der mehreren Selektoren mit einem der mehreren Konfigurationsregister gekoppelt ist, der Freigabeeingang (EN) jedes der mehreren Selektoren (102, 104, 106, 108) mit einem der mehreren Ausgänge (90, 92, 94, 96) des Bankdekodierers (80) gekoppelt ist und nach Erzeugung eines Freigabesignals durch den Bankdekodierer an einem der Ausgänge der mit dem freigegebenen Bankdekodiererausgang gekoppelte Selektor an seinem Signalengang das Steuersignal (130, 132, 134) erzeugt, welches die Speicherkapazität derjenigen Speicherbank anzeigt, auf die die Zugriffsadresse zugreift;
die Speicherkapazitäts-Komparatoreinrichtung (84) mit den Konfigurationsregistern gekoppelt ist; und
die dritte Dekodiereinrichtung (86) eine mit der Speicherkapazitäts-Komparatoreinrichtung (84) und den Ausgängen des Bankdekodierers (80) gekoppelte Dekodierlogik (86) aufweist, wobei die Dekodierlogik auf die an den Ausgängen des Bankdekodierers und der Speicherbank-Speicherkapazitäts-Komparatoreinrichtung erzeugten Freigabesignale anspricht zwecks Erzeugung des Verschachtelungs-Steuersignals (76).

5. System nach einem der vorhergehenden Ansprüche, bei dem die Zwischen-Steuersignale (68) mehrere Bits umfassen, von denen jedes jeweils einer der Speicherbänke entspricht, wobei dasjenige Bit der mehreren Bits, das einer vorgegebenen Speicherbank entspricht, freigegeben wird, wenn die Zugriffsadresse gleich oder geringer ist als die höchste Adresse der vorgegebenen Speicherbank.

6. System nach einem der vorhergehenden Ansprüche, das ferner eine Einrichtung (100) aufweist, die auf das selektierte Banksignal (DB0HIT-DB3HIT) anspricht zwecks Erzeugung eines Gültigkeitssignals (70), das anzeigt, ob die Speicherzugriffsadresse auf eine der Speicherbänke zugreift.

7. System nach einem der vorhergehenden Ansprüche, bei dem die Speicherbänke eine erste, eine zweite, eine dritte und eine vierte Speicherbank umfassen, und bei dem die Speicherbank-Speicherkapazitäts-Komparatoreinrichtung (84) feststellt, ob die erste und die zweite Speicherbank die gleiche Speicherkapazität (140), die dritte und die vierte Speicherbank die gleiche Speicherkapazität (142) und die erste, die zweite, die dritte und die vierte Speicherbank die gleiche Speicherkapazität (144) haben.

8. System nach Anspruch 7, bei dem das Verschachtelungs-Steuersignal (76) anzeigt, ob die erste und die zweite oder die dritte und die vierte Speicherbank verschachtelbar (164) sind und ob die erste, die zweite, die dritte und die vierte Speicherbank verschachtelbar (166) sind oder ob keine der Speicherbänke verschachtelbar (162) ist.

## Revendications

1. Système de comparaison de blocs de mémoire à utiliser dans un système de mémoire incluant une pluralité de blocs de mémoire successivement ordonnés (DB0-DB3), chaque dit bloc de mémoire présentant un type donné de capacité de stockage, ledit système de comparaison de blocs de mémoire répondant à une adresse d'accès en mémoire (64) et comprenant :
des moyens de configuration (12) pour fournir des données de configuration (DT0-DT3) représentatives du type de capacité de stockage de chacun desdits blocs de mémoire ,
des moyens (14, 16) répondant auxdites données de configuration pour fournir une pluralité de signaux de capacité de stockage cumulative (62, 58, 56, 54), dans lesquels chacun desdits signaux de capacité de stockage cumulative correspond à l'un desdits blocs de mémoire (DSO-DB3) et comprend des données représentatives de la capacité de stockage totale de son bloc correspondant desdits blocs de mémoire et les capacités de stockage des blocs de mémoire ordonnés précédents ;
des moyens de comparaison (24) pour comparer ladite adresse d'accès en mémoire (64) auxdites capacités de stockage cumulatives (62, 58, 56, 54) pour fournir un ensemble de signaux de commande intermédiaires (68), ledit ensemble de signaux de commande intermédiaires incluant une information indiquant si ladite adresse d'accès en mémoire est présente à l'intérieur de l'un desdits blocs de mémoire ; et
des premiers moyens décodeurs (80) comportant une sortie (72) et répondant audit ensemble de signaux de commande intermédiaires (68) pour fournir un signal de bloc sélectionné (DB0HIT-DB3HIT) au niveau de ladite sortie, dans lesquels le signal de bloc sélectionné indique que le bloc mémoire est accessible par ladite adresse d'accès en mémoire ;
caractérisé en ce que ledit système (10) comprend, de plus :
des seconds moyens décodeurs (82) comportant une seconde sortie (74) et répondant audit signal de bloc sélectionné (DB0HIT-DB3HIT) et auxdites données de configuration (DT0-DT3), pour fournir au niveau de ladite seconde sortie (74) un signal de commande du type de capacité de bloc sélectionné (130, 132, 134) indiquant le type de capacité de stockage du bloc de mémoire accessible à ladite adresse d'accès en mémoire ;
des moyens de comparaison de type de capacité de stockage de bloc de mémoire (84) répondant auxdites données de configuration (DT0-DT3), pour déterminer si deux desdits blocs de mémoire, ou davantage, présentent le même type de capacité de stockage ; et
des troisièmes moyens de décodage (86), répondant audit signal de bloc sélectionné (DB0HIT-DB3HIT) et auxdits moyens de comparaison de type de capacité de stockage des blocs de mémoires (84) pour générer un signal de commande d'imbrication (76) représentatif d'un facteur d'imbrication pour le bloc de mémoire auquel on accède par ladite adresse d'accès en mémoire.

2. Système selon la revendication 1 dans lequel le signal de bloc sélectionné (DB0HIT-DB3HIT) comprend une pluralité de signaux d'activation (118, 120, 122, 124), chacun de ladite pluralité des signaux d'activation correspondant à l'un desdits blocs de mémoire, dans lequel lesdits premiers moyens décodeurs (80) fournissent un signal de ladite pluralité de signaux d'activation qui correspond au bloc de mémoire auquel on accède par ladite adresse d'accès.

3. Système selon la revendication 2 dans lequel lesdits seconds moyens décodeurs (82) comprennent une pluralité de sélecteurs (102, 104, 106, 108), dans laquelle chacun de ladite pluralité de sélecteurs possède un signal d'entrée (110, 112, 114, 116), un signal de sortie et une entrée d'activation (EN) et correspond à l'un desdits blocs de mémoire , dans laquelle chacun desdits sélecteurs reçoit les données de configuration (DT0-DT3) représentatives du type de capacité de son bloc de mémoire respectif à son entrée de signal, et génère le signal de commande représentatif du type de capacité de son bloc de mémoire respectif au niveau de sa sortie de signal lorsque le signal correspondant de ladite pluralité de signaux d'activation (118,120, 122, 124) est appliqué à son entrée d'activation (EN).

4. Système selon la revendication 1 dans lequel :
lesdits moyens de configuration (12) comprennent une pluralité de registres de configuration, dans lesquels chacun de ladite pluralité de registres de configuration correspond à l'un desdits blocs de mémoire et contient lesdites données de configuration (DT0-DT3) indiquant le type de capacité de stockage de son bloc correspondant parmi lesdits blocs de mémoire ;
lesdits moyens (14, 16) répondant auxdites données de configuration comprennent des moyens d'addition (16) couplés à ladite pluralité de registres de configuration, pour générer ladite pluralité de signaux de capacité de mémoire cumulative (62, 56, 56, 54) en réponse aux données de configuration contenues dans ladite pluralité de registres de configuration ;
lesdits moyens de comparaison (24) comprennent un comparateur d'adresse (24) agencé pour recevoir ladite pluralité de signaux de capacité de mémoire cumulative (62, 58, 56, 54) et ladite adresse d'accès (64) et pour générer, en réponse à cela, ledit ensemble de signaux de commande intermédiaires (68) ;
lesdits premiers moyens décodeurs (80) comprennent un décodeur de bloc (80) comportant une pluralité de sorties (90, 92, 94, 96) , dans lesquels chacune de ladite pluralité de sorties correspond à l'un desdits blocs de mémoire, ledit décodeur de bloc étant agencé pour recevoir ledit ensemble de signaux de commande intermédiaires (68) et génerer , en réponse à ceux-ci, un signal d'activation (118, 120, 122, 124) à une sortie de ladite pluralité de sorties (90, 92, 94, 96) qui correspond au bloc mémoire auquel on accède par l'adresse d'accès ;
lesdits seconds moyens décodeurs (82) comprennent une pluralité de sélecteurs (102, 104, 106, 108), dans lesquels chaque sélecteur de ladite pluralité de sélecteurs correspond à l'un desdits blocs de mémoire et comporte une entrée de signal (110, 112, 114, 116), une entrée d'activation (EN), et une sortie de signal (74), dans lequel l'entrée de signal de chaque sélecteur de ladite pluralité de sélecteurs est couplée à l'un de ladite pluralité de registres de configuration, dans lequel l'entrée d'activation (EN) de chaque sélecteur de ladite pluralité de sélecteurs (102, 104, 106, 108) est couplée à l'une de ladite pluralité de sorties (90, 92, 94, 96) dudit décodeur de bloc (80), de façon que lors de la production d'un signal d'activation par ledit décodeur de bloc au niveau de l'une desdites sorties, le sélecteur couplé à la sortie de décodeur de bloc activée génère à sa sortie de signal ledit signal de commande (130, 132, 134) indiquant le type de capacité de stockage du bloc de mémoire auquel on accède par l'adresse d'accès ;
lesdits moyens de comparaison de type de capacité de stockage (84) sont couplés auxdits registres de configuration ; et
lesdits troisièmes moyens de décodage (86) comprennent une logique de décodage (86) couplée auxdits moyens de comparaison de type de capacité de stockage (84) et aux sorties dudit décodeur de bloc (80), ladite logique de décodage répondant aux signaux d'activation générés au niveau desdites sorties dudit décodeur de bloc et auxdits moyens de comparaison de type de capacité de stockage de bloc de mémoire , afin de générer ledit signal de commande d'imbrication (76).

5. Système selon l'une quelconque des revendications précédentes dans lequel lesdits signaux de commande intermédiaires (68) comprennent une pluralité de binaires, dans lequel chaque binaire de ladite pluralité de binaires correspond à l'un desdits blocs de mémoire , dans lequel le binaire de ladite pluralité de binaires qui correspond à un bloc donné desdits blocs de mémoire est activé si l'adresse d'accès est égale ,ou inférieure à l'adresse la plus élevée dudit bloc donné desdits blocs de mémoire.

6. Système selon l'une quelconque des revendications précédentes comprenant, de plus, des moyens (100) répondant audit signal de bloc sélectionné (DB0HIT-DB3HIT), pour générer un signal de validité (70) indiquant si l'adresse d'accès en mémoire accède à l'un quelconque desdits blocs de mémoire.

7. Système selon l'une quelconque des revendications précédentes dans lequel lesdits blocs de mémoire comprennent les premier, second, troisième et quatrième blocs de mémoire, et dans lequel lesdits moyens de comparaison de type de capacité de stockage de bloc de mémoire (84) déterminent si lesdits premier et second blocs de mémoire possèdent le même type de capacité de stockage (140), si lesdits troisième et quatrième blocs de mémoire possèdent le même type de capacité de stockage (142) et si lesdits premier, second, troisième et quatrième blocs de mémoire possèdent le même type de capacité de stockage (144).

8. Système selon la revendication 7 dans lequel ledit signal de commande d'imbrication (76) fournit une indication pour savoir si lesdits premier et second ou lesdits troisième et quatrième blocs de mémoire peuvent être imbriqués (164), si lesdits premier, second, troisième et quatrième blocs de mémoire peuvent être imbriqués (166), ou si aucun desdits blocs de mémoire ne peut être imbriqué (162).
